Europäisches Patentamt

European Patent Office

Office européen des brevets

(11) Publication number: 0 192 339
A2

# (12) EUROPEAN PATENT APPLICATION

(21) Application number: 86300444.6

(22) Date of filing: 23.01.86

(51) Int. Cl.⁴: B 60 B 27/00
F 16 D 1/06

(30) Priority: 19.02.85 US 702919

(43) Date of publication of application:
27.08.86 Bulletin 86/35

(84) Designated Contracting States:
DE FR GB IT

(71) Applicant: GENERAL MOTORS CORPORATION
General Motors Building 3044 West Grand Boulevard
Detroit Michigan 48202(US)

(72) Inventor: Farrell, Robert C.
165 Harvest Lane
Frankenmuth Michigan 48734(US)

(74) Representative: Breakwell, John Neil Bower et al,
GM Patent Section Luton Office (F6) P.O. Box No. 3
Kimpton Road
Luton Beds. LU2 0SY(GB)

(54) Wheel bearing assembly.

(57) A wheel bearing assembly comprises a wheel hub (12), a bearing assembly (16) and a retainer for retaining the inner ring (32) of the bearing assembly on the wheel hub.

The retainer includes a retaining ring (36) and a load ring (40) which is plastically deformed radially inwardly so that the inner ring of the bearing assembly is biased against an annular shoulder (20) of the wheel hub under a substantial axial preload.

Fig. 1

EP 0 192 339 A2

## WHEEL BEARING ASSEMBLY

This invention relates to a wheel bearing assembly as specified in the preamble of claim 1, for example as disclosed in US-A-4 449 841.

A wheel bearing assembly in accordance with the present invention is thus applicable to a so-called unitised wheel bearing assembly for a motor vehicle which includes a wheel hub and an outer drive member of a constant-velocity universal joint formed as an integral part of the wheel hub.

It is already known from US-A-4 424 047, as well as the said US-A-4 449 841, that the inner ring members of a double-row ball bearing can be mounted on the wheel hub outer drive member and retained thereon by a profiled ring which is designed to be plastically deformed to seat in a V-shaped groove of the wheel hub outer drive member and thereby apply an axial preloading force to the inner ring members.

With a retainer means as disclosed in the said US-A-4 424 047, there is difficulty in applying and maintaining a high axial preloading force because of the small contact surface between the face of the inner bearing ring and the edge of the plastically deformed profiled ring.

The aforesaid US-A-4 449 841 discloses the use of a profiled ring which is of L-shaped cross-section so that an independent axial preload force can be applied while a radial deformation force is applied to plastically deform the axially extending leg into the V-shaped groove of the wheel hub outer drive member. This solution, which is stated to provide enduring deformation of an axial leg portion that is deformed into an annular groove, does however introduce the complexity of simultaneously applying independent axial and radial forces to the profiled ring.

Moreover, this solution fails to deal with another difficulty of the earlier US-A-4 424 047, which is that the magnitude of the axial preload force produced is very sensitive to the tolerance stack-up of the manufactured parts in the axial direction, such that the wheel hub outer drive member, the ball bearing and the profiled ring must be made within very close tolerances to provide any accurate axial preload of substantial magnitude.

The present invention is concerned with providing a new and improved means and method for retaining an inner bearing ring member on a wheel hub outer drive member so that a substantial axial preload is always applied to the inner bearing ring member. To this end a wheel bearing assembly in accordance with the present invention is characterised by the features specified in the characterising portion of claim 1.

The present invention thereby makes available a unitised wheel bearing assembly in which an inner bearing ring member is retained on a wheel hub outer drive member by a retainer means which applies a substantial axial preload to the inner race member so as to counteract wheel loading, particularly during cornering manoeuvres of a vehicle.

The present invention also makes available a unitised wheel bearing assembly in which an inner bearing ring member is retained on a wheel hub outer drive member under a substantial axial preload by a retainer means which can accommodate a substantial tolerance stack-up variation.

The present invention further makes available a unitised wheel bearing assembly in which an inner bearing ring member is retained on a wheel hub outer drive member by a retainer means which has a substantial area of contact for the transmission of axial force to the inner bearing ring member and which requires the application of only a radially directed deformation force.

In the drawing:

Figure 1 is a longitudinal section of a first embodiment of a wheel bearing assembly in accordance with the present invention;

Figure 2 is a fragmentary enlarged view showing the portion of the wheel bearing assembly which is within the dash-line circle 2 of Figure 1;

Figure 3 is an enlarged view similar to Figure 2 but showing the assembly after plastic deformation of a load ring thereof; and

Figure 4 is an enlarged view similar to Figure 3 but showing a wheel bearing assembly utilising a modified load ring.

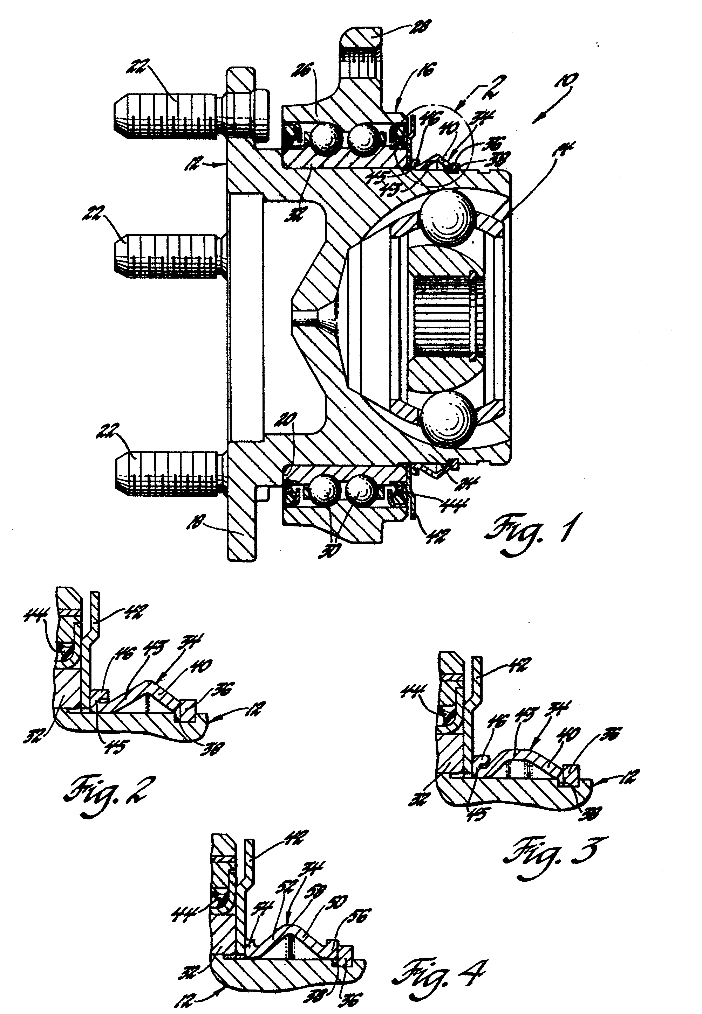

With reference now to the drawing, Figure 1 shows a wheel bearing assembly 10 for a motor vehicle which comprises a wheel hub 12, a universal joint 14 by means of which drive is transmitted to the wheel hub 12, and a bearing assembly 16 by means of which the wheel hub 12 is rotatably supported by the vehicle.

The wheel hub 12 has a flange 18 and an annular shoulder 20 at one end. The flange 18 carries several studs 22 for attaching the vehicle wheel (not shown). The wheel hub 12 has a tubular part 24 at the other end which is shaped to provide the outer drive member of the universal joint 14.

The universal joint 14 which is illustrated is the well-known Rzeppa constant-velocity universal joint, and will thus not be described in detail. Other well-known constant-velocity universal joints can alternatively be used, provided that the outer drive member can be made an integral part of the wheel hub 12.

The bearing assembly 16 comprises an outer bearing ring 26 having a flange 28 for mounting the wheel bearing assembly 10 to a vehicle support (not shown), two rows of balls 30, and an inner bearing ring 32 mounted on the wheel hub 12 against the shoulder 20, preferably with a light press fit.

The inner bearing ring 32 is retained on the wheel hub 12 against the annular shoulder 20 under an axial preload by retainer means 34 which comprises a split retaining ring (lock ring) 36 seated in an annular groove 38 of the wheel hub 12, and a load ring 40.

The load ring 40 encircles the wheel hub 12 at a location between the retaining ring 36 and the inner bearing ring 32. The particular wheel bearing assembly 10 which is illustrated includes a sheet metal shield 42 to protect the inboard bearing seal 44. However, such a shield is not essential to the invention, and the load ring 40 could alternatively act directly on the end face of the inner bearing ring 32.

The load ring 40 is formed of steel stock which is about 1.25 to 1.50 millimetres in thickness. It is a profiled ring comprising a deformable band 43 of V-shaped concavo-convex cross-section, with a radial flange 45 at the end of the load ring 40 which is adjacent the inner bearing ring 32. The radial flange 45 increases the radial stiffness at the end of the load ring 40 which applies the axial preload, and also increases the contact area for transmitting the axial preload force to the inner bearing ring 32. The radial stiffness at the flanged end of the load ring 40 is further increased by a circular rim 46 at the outer end of the radial flange 45.

A substantial axial preload force is applied to the inner bearing ring 32 simply by plastically deforming the band 43 radially inwardly at its maximum diameter (apex) as shown in Figure 3, such as by means of a radial swaging die. In practice, the diameter at the apex can be reduced by about 3 millimetres to produce an axial preload force from about 13,000 to 27,000 Newtons. Thus a substantial axial preload can be achieved, and a considerable tolerance stack-up can be accommodated.

Since the radial flange 45 increases the contact area through which the axial preload force is transmitted the possibility of permanent deformation is avoided. Furthermore, the diameter at the flanged end of the load ring 40 which applies the axial preload force to the bearing inner ring 32 is maintained or slightly increased when the band 43 is permanently deformed, because of the increased radial stiffness provided by the radial flange 45 and the rim 46. This ensures that the preload force is properly applied to the end face of the inner bearing ring 32 outwardly of a chamfer formed at the ring bore.

Figure 4 shows a modified load ring 50 for field installation. The modified load ring 50 comprises a deformable band 52 of V-shaped cross-section with a radial flange 54,56 at each end of the load ring 50. One or both of the radial flanges 54,56 may be notched to hold the load ring 50

circumferentially while the band 52 is plastically deformed radially inwardly by a rolling operation applied at its apex 58.  The diameter at the apex 58 is reduced by about the same amount as in the first embodiment, i.e. 3mm, to produce an axial preload force from about 13,000 to 27,000 Newtons.

Although the load rings 40 and 50 have been described and shown as having deformable bands 43 or 52 of V-shaped cross-section, other concavo-convex cross-sections, such as part-spherical, are possible within the scope of the invention.

Claims:

1.  A wheel bearing assembly for a motor vehicle, comprising a wheel hub (12) which has wheel mounting means (18) and an annular shoulder (20) at one end thereof and a tubular part (24) at the other end thereof, and which forms an outer drive member of a constant-velocity universal joint (14) by means of which drive may be transmitted to the wheel hub (12), a bearing assembly (16) having an outer bearing ring (26) which has means (28) for securing the outer bearing ring (28) to a vehicle support and an inner bearing ring (32) which is mounted on the wheel hub (12) against the annular shoulder(20), and retainer means (34) for retaining the inner bearing ring (32) on the wheel hub (12), characterised in that the said retainer means (34) comprises a retaining ring (36) having an inner margin disposed in an annular groove (38) in the tubular part (24) of the wheel hub (12), and a load ring (40) encircling the wheel hub (12) at a location between the retaining ring (36) and the inner bearing ring (32) of the bearing assembly (16), the load ring (40) including a band (43) which is of concavo-convex cross-section and on being plastically deformed radially inwardly causes the inner bearing ring (32) to be biased against the annular shoulder (20) under a substantial axial preload provided by the load ring (40).

2.  A wheel bearing assembly according to claim 1, characterised in that the load ring (40) has a flange (45) at the end thereof which is adjacent the inner bearing ring (32) of the bearing assembly (16), to increase the radial stiffness so that the said end maintains or increases diameter when the concavo-convex band (43) of the load ring (40) is plastically deformed radially inwardly.

3. A wheel bearing assembly according to claim 2, characterised in that the concavo-convex cross-section of the band (43) is V-shaped, and that the flange (45) at the end of the load ring (40) has a circular rim (46) at its outer end which extends towards the other end of the load ring (40).

4. A wheel bearing assembly according to claim 2, characterised in that the concavo-convex cross-section of the band (43) is V-shaped, that the load ring (50) has a second flange (56) at the other end thereof, and that at least one of the flanges (54,56) is notched for holding the load ring (50) circumferentially while the band (43) is being plastically deformed radially inwardly by a rolling operation.

0192339

Fig. 1

Fig. 2

Fig. 3

Fig. 4